# EUROPEAN PATENT APPLICATION

(11) **EP 1 770 539 A1**
(43) Date of publication of application: **04.04.2007**
(21) Application number: 05291916.4
(22) Date of filing: 15.09.2005
(51) Int. Cl.: G06F 13/40, H04L 25/49

(54) **Method of transmitting information words over a bus, and driver circuit and circuit board using the same**

(71) Applicant: Alcatel Lucent, 75008 Paris (FR)
(72) Inventor: Modena, Marco, 23888 Rovagnate (Lecco) (IT); Costantini, Carlo, 22064 Casatenovo (Lecco) (IT); Bobbo, Gianluca, 20052 Monza (Milano) (IT)
(74) Representative: Menzietti, Domenico

(57) **Abstract**

The method of transmitting information words over a bus (BS) is implemented by a driver circuit (DRV); the information words (IW) are coded into corresponding coded words (CW) according to a predetermined code and electric signals corresponding to the coded words (CW) are provided to the bus (BS); each information word includes a first number of bits and each coded includes a second number of bits, the second number being bigger than the first number; the predetermined code is such that each coded word comprises a number of zero-value or one-value bits bigger than a lower limit and smaller than a higher limit, said lower limit being bigger than one and said higher limit being smaller than said second number minus one.

## Description

### FIELD OF THE INVENTION

The present invention relates to a method of transmitting information words over a bus according to the preamble of claim 1 and relates further to a driver circuit and a circuit board using the same.

### BACKGROUND OF THE INVENTION

Usually, in electronic apparatuses, information words, i.e. a plurality of bits, are transmitted by means of a driver circuit over a bus, i.e. a plurality of electric lines, typically using a different electric line of the bus for a corresponding different bit of the word; in other words, the number of lines corresponds to the number of bits.

Sometimes, information words are coded before being transmitted; according to a known simple example of such coding, a parity bit is added to the information word and the information word together with the parity bit is transmitted over the bus (using a bus with an additional electric line); the parity bit is used for error detection purposes.

It is known from patent US 5,917,364 a coding method for the transmission of information word over a bus able to reduce switching noise and power consumption; according to this method, a transmitted coded word depends on the information word to be transmitted and on the information word already transmitted; this method tries to minimize the number of state transitions on each line of the bus. The Applicant has considered this method and has realized that, when it is directly applied to a data bus used for communicating with a memory device, it reduces power consumption only during write phases but not during the read phases.

The Applicant has noticed that when a state transition occurs on a line of a bus the amplitude of the corresponding electric signal oscillates during a certain time interval before stabilizing. Therefore, in order to read this electric signal reliably, it is necessary to wait until its amplitude is sufficiently stabilized; usually, the higher are the oscillations, the longer is the time to be waited for. These oscillations lead to a limitation in the maximum operating frequency of the bus; in the case of busses used to access DDR [Double Data Rate] SDRAM [Synchronous Dynamic RAM] memory devices, the data bus is more critical than the address bus due to its "double rate".

### SUMMARY OF THE INVENTION

It is the general object of the present invention to improve a bus particularly by increasing its operating frequency and/or by increasing its transmission reliability.

It is a more specific object of the present invention to provide a transmission method and circuit causing reduced oscillations on the bus lines.

These objects are substantially achieved through the transmission method having the functionalities set out in the annexed claims.

The present invention starts from the recognition that the amplitude of the oscillations on a bus depends, among other things, on the difference between the total (considering the whole bus) number of zero-value bits of the word actually transmitted and the total (considering the whole bus) number of zero-value bits of the word previously transmitted or equivalently on the difference between the total (considering the whole bus) number of one-value bits of the word actually transmitted and the total (considering the whole bus) number of one-value bits of the word previously transmitted.

The basic idea of the present invention is to code the information words so that each transmitted coded word has a number of zero-value bits and a number of one-value bits that are not much different between each other. This directly leads to the fact that the above mentioned difference is null or small. Such coding depends only on the information word to be transmitted and not on the information word or words previously transmitted; therefore, it can be carried out with a simple circuit or program especially if the information words consist of few bits, e.g. 8 or 16.

This transmission method can advantageously be used by a driver circuit particularly in a circuit board; both such a driver circuit and such a circuit board, as claimed in the annexed claims, are further aspects of the present invention.

### BRIEF DESCRIPTION OF THE DRAWINGS

The present invention will become more apparent from the following description to be considered in conjunction with the annexed drawings, wherein:
Fig.1 shows a simplified block diagram of a bus connected to a driver circuit according to the present invention and to an input buffer,
Fig.2 shows a partial and simplified block diagram of a first embodiment of a circuit board according to the present invention,
Fig.3 shows a partial and simplified block diagram of a second embodiment of a circuit board according to the present invention,
   and
Fig.4 shows a partial and simplified block diagram of a third embodiment of a circuit board according to the present invention,

The following description and the annexed drawings are given for explanation purposes only and therefore are not to be interpreted limitatively.

### BEST MODE FOR CARRYING OUT THE INVENTION

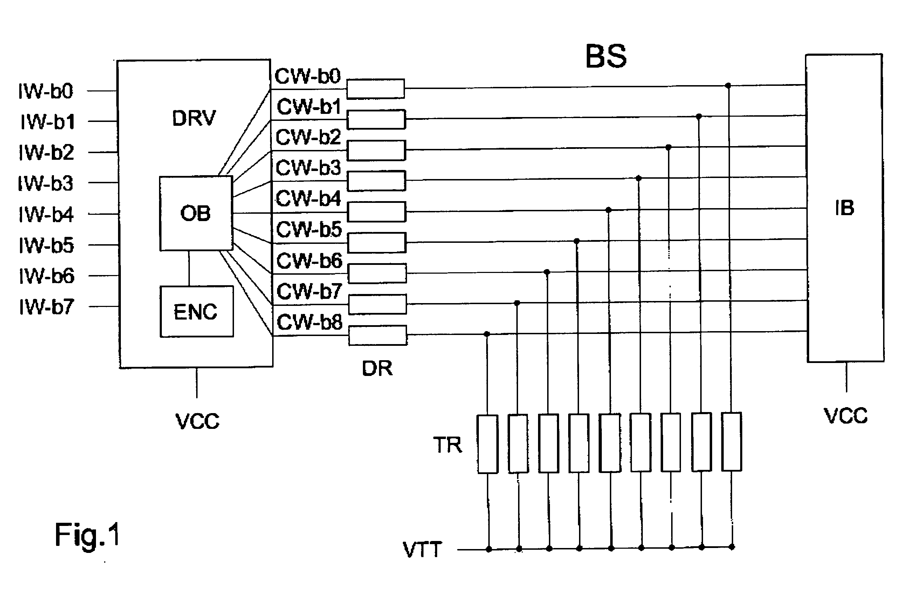

In Fig.1, there is shown a bus BS consisting of nine electric lines driven by a driver circuit DRV; driver circuit DRV comprises an output buffer OB that is directly connected to bus BS for transmitting words over bus BS; an input buffer IB is directly connected to bus BS for receiving words from bus BS. Driver circuit DRV is typically part of a bigger circuit, particularly an integrated circuit e.g. a microprocessor, not shown in the figure. Input buffer IB is typically part of a bigger circuit, particularly an integrated circuit e.g. an ASIC [Application Specific Integrated Circuit] or a FPGA [Field Programmable Gate Array], not shown in the figure. Both circuit DRV, including buffer OB, and buffer IB are supplied by a supply voltage VCC. In general, a plurality of input buffers are connected to a bus and Fig.1 is a simplified case.

Bus BS provides for nine dumping resistors DR (one for each bus line) and for nine parallel termination resistors TR (one for each bus line) supplied by a termination voltage VTT; particularly, bus BS and buffer OB are realized according to known SSTL2-I [Stub Series Terminated Logic type "2" subtype "I"] standard and therefore voltage VCC is 2.5V, voltage VTT is 1.25V, resistors DR are 25 Ohm, resistors TR are 50 Ohm.

Circuit DRV has eight information word inputs IW-b0, IW-b1, IW-b2, IW-b3, IW-b4, IW-b5, IW-b6, IW-b7 for receiving information words IW and nine coded word outputs CW-b0, CW-b1, CW-b2, CW-b3, CW-b4, CW-b5, CW-b6, CW-b7, CW-b8 for transmitting coded words CW over bus BS.

Circuit DRV comprises, in addition to buffer OB, an encoder ENC connected to buffer OB; information words IW are coded by encoder ENC into corresponding coded words CW according to a predetermined code. Encoder ENC may be realized through hardware and/or software means. When circuit DRV is part of an ASIC or FPGA, encoder ENC is typically realized through hardware means only. When the encoder is realized through hardware and software means, the encoder is for example a processor, e.g. a digital signal processor or a microprocessor running a program performing the coding of the information words into the coded words; the program can be written in a programming language like for example C.

Many different coding methods may be implemented through the circuit architecture shown in Fig.1 including the coding method according to the present invention that comprises many different embodiments.

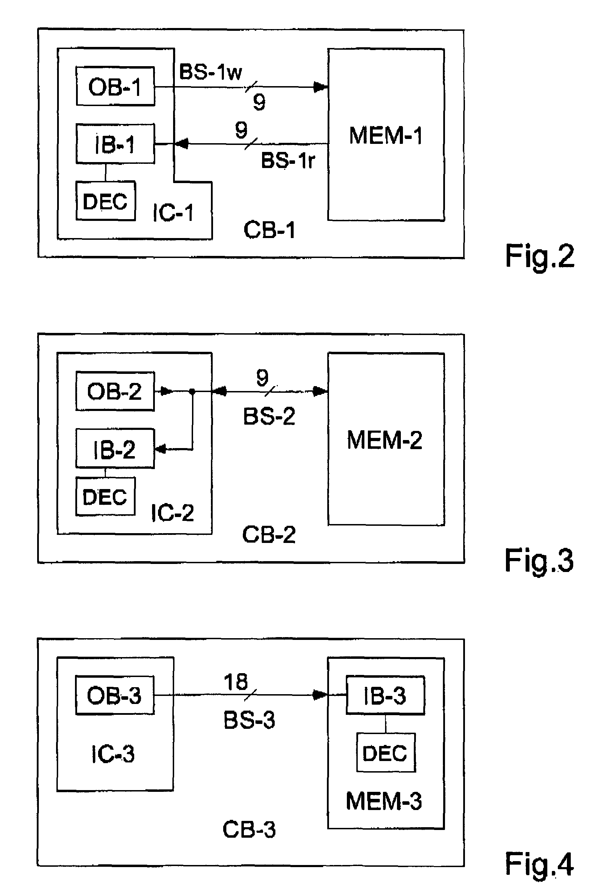

Figures from Fig.2 to Fig.4 show circuit boards where the present invention is applied.

With reference to Fig.2, a circuit board CB-1 is shown comprising two monodirectional data busses BS-1w and BS-1r; each of them consists of nine lines. These busses connect an integrated circuit IC-1 and a memory device MEM-1; bus BS-1w is used for transmitting data to be written into memory device MEM-1 and bus BS-1r is used for transmitting data read out of memory device MEM-1.

Integrated circuit IC-1 comprises a driver circuit of the type shown in Fig. (i.e. provided with an encoder ENC) but only its output buffer OB-1 is shown in Fig.2; integrated circuit IC-1 comprises further an input buffer IB-1 connected to a decoder DEC; buffer OB-1 is directly connected to bus BS-1w and buffer IB-1 is directly connected to bus BS-1r.

With reference to Fig.3, a circuit board CB-2 is shown comprising a bidirectional data bus BS-2 that consists of nine lines. Bus BS-2 connects an integrated circuit IC-2 and a memory device MEM-2; bus BS-2 is used both for transmitting data to be written into memory device MEM-2 and for transmitting data read out of memory device MEM-2.

Integrated circuit IC-2 comprises a driver circuit of the type shown in Fig. 1 (i.e. provided with an encoder ENC) but only its output buffer OB-2 is shown in Fig.3; integrated circuit IC-2 comprises further an input buffer IB-2 connected to a decoder DEC; both buffer OB-2 and buffer IB-2 are directly connected to bus BS-2.
With reference to Fig.4, a circuit board CB-3 is shown comprising an address bus BS-3 that consists of eighteen lines. Bus BS-3 connects an integrated circuit IC-3 and a memory device MEM-3; bus BS-3 is used for transmitting sixteen-bit addresses to be used for reading and/or writing operations on memory device MEM-3.

Integrated circuit IC-3 comprises a driver circuit of the type shown in Fig.1 (i.e. provided with an encoder ENC) but only its output buffer OB-3 is shown in Fig.4; memory device MEM-3 comprises an input buffer IB-3 connected to a decoder DEC; both buffer OB-3 and buffer IB-3 are directly connected to bus BS-3.

It is evident that figures from Fig.2 to Fig.4 show only a minor part of all components comprised in the respective circuit boards; this has been done for simplification purposes only.

It must be noted that a memory device is typically connected both to a data bus and to an address bus; therefore, the solution shown in Fig.2 may be combined with the solution shown in Fig.4 or the solution shown in Fig.3 may be combined with the solution shown in Fig.4. Anyway, for example, the solution of Fig.2 or Fig.3 might be combined with a traditional solution for the transmission of addresses over a bus.

It must be considered that the numbers of bus lines in the above described embodiments are provided only as examples; other numbers may be used even if the above numbers are quite typical.

The method according to the present invention is useful for transmitting information words, e.g. data words or address words, over a bus through a driver circuit.

In general, according to the method of the present invention, information words are coded into corresponding coded words according to a predetermined code and electric signals corresponding to the coded words are provided to the bus; each information word includes a first number of bits and each coded word includes a second number of bits, the second number being bigger than the first number; the predetermined code is such that each coded word comprises a number of zero-value or one-value bits bigger than a lower limit and smaller than a higher limit; the lower limit is an integer number bigger than one and the higher limit is an integer number smaller that said second number minus one.

In the above definition, by "information word" it is meant simply a plurality of bits; therefore, if the present invention would be used e.g. in a 16-bit data-word microprocessor, this method could be applied to all the 16 bits of each data-word or to a subset thereof, e.g. 8 bits or 12 bits. In the above definition, by "bus" it is meant simply a plurality of electric lines. In many electronic apparatuses and circuit boards, the bus comprises lines for data, lines for addresses, lines for control signals, and lines for electric power; in these cases, the present invention would usually be applied to a subset of these lines, typically the data lines and/or the address lines.

Preferably, according to the present invention, the number of zero-value bits and the number of one-value bits in each coded word are not much different between each other.

The above general definition of the method can be better understood through the following examples and with reference to Fig.1.

Information words consist of 8 bits and coded words consists of 9 bits; therefore, the vocabulary of the information words consists of 256, i.e. 2⁸, different words and the vocabulary of the coded words consists of 512, i.e. 2⁹, words.

An information word comprises a number of zero-value bits from zero to eight; equally, an information word comprises a number of one-value bits from zero to eight.

If information 8-bit words would be transmitted over an 8-line bus as they are, the difference between the total (considering the whole bus) number of zero-value bits of a word actually transmitted and the total (considering the whole bus) number of zero-value bits of the word previously transmitted might be up to eight, which would give rise to high oscillations; the same consideration applies to one-value bits.

Considering the coded word vocabulary, there are 126 different 9-bit words having 4 zero-value bits (and correspondingly 5 one-value bits); this derives from the general formula
**Errore. L'argomento parametro è sconosciuto.**
when n=9 and k=4, which leads to (9·8·7·6·5·4·3·2·1) / (4·3·2·1)·(5·4·3·2·1) = 126 ; and there are also 126 different 9-bit words having 5 zero-value bits. Therefore, within the coded word vocabulary there are 125+126=252 different words having either 4 or 5 zero-value bits.

If 9-bit coded words selected only within the above defined subset is transmitted over a 9-line bus (instead of transmitting 8-bit information words over a 8-line bus), the difference between the total number of zero-value bits of a word actually transmitted and the total number of zero-value bits of the word previously transmitted is either one or zero, consequently oscillations in the electric signals of the bus lines is very low.

Anyway, in the present example, the information word vocabulary consists of 256 different words; therefore, there is a difference of 4 words.

According to the terminology used above for defining the method according to the present invention, in such example, the first number is 8, the second number is 9, the lower limit is 3 and the higher limit is 6. The two limits may be considered derived from integer number 3 that is added to zero, for the lower limit, and that is subtracted from the second number, for the higher limit. Alternatively, the two limits may be considered derived from the division of the second number by 2, i.e. 4,5; for the lower limit, such division is rounded to the lower integer number, i.e. 4, and subtracted by one; for the higher limit, such division is rounded to the upper integer number, i.e. 5, and added by one. If the second number would have been even (like 10) and not odd (like 9), no rounding operation would have been necessary.

A way to solve the above problem of the four words, would be to cancel four words from the information word vocabulary. In this case, a bilateral correspondence can exist between the words of the information word vocabulary and the words of the subset of the coded word vocabulary. Many different codes may be defined for implementing such a correspondence; therefore, additional features may be implemented by an appropriate choice of the code.

If no word is to be cancelled from the information word vocabulary, words must be added to the subset of the coded word vocabulary. Many possibilities exist taking into account that, within the 9-bit coded word vocabulary, there are 84 different 9-bit words having 3 zero-value bits and there are 84 different 9-bit words having 6 zero-value bits.

A first possibility is to add to the above defined subset four coded words taken from the 84 different 9-bit coded words having 3 zero-value bits. In this case, the above mentioned difference is up to two and the oscillations are still quite low. Many different codes may be defined for implementing such a correspondence; therefore, additional features may be implemented by an appropriate choice of the code.

A second possibility is to add to the above defined subset four coded words taken from the 84 different 9-bit coded words having 6 zero-value bits. In this case, the above mentioned difference is up to two and the oscillations are still quite low. Many different codes may be defined for implementing such a correspondence; therefore, additional features may be implemented by an appropriate choice of the code.

A third possibility is to add to the above defined subset four coded words taken from the 84 different 9-bit coded words having 3 zero-value bits or from the 84 different 9-bit coded words having 6 zero-value bits. In this case, the above mentioned difference is up to three and the oscillations are still not very high. Many different codes may be defined for implementing such a correspondence; therefore additional features may be implemented by an appropriate choice of the code.

The coding and decoding according to what described above may be realized e.g. through a ROM [Read Only Memory] device. For coding, 256 9-bit locations are necessary: the information word is used for addressing the memory device and the word read out of the memory device is the corresponding coded word. For decoding, 512 9-bit locations may be used: the coded word is used for addressing the memory device and the first eight bits of the word read out of the memory device is the corresponding information word; in this way, an error detection method can be easily implemented; in fact, the ninth bit of the word read out of the memory device may signal an error if the coded word is not within the coded word vocabulary.

The main advantages of the method according to the present invention are the increase in the bus operating frequency and/or the increase in the bus transmission reliability mainly due to the reduced oscillations amplitude.

It is to be noted that, through the method according to the present invention, many additional advantages may be obtained:
- diagnostic capabilities of the bus,
- reduction of power consumption,
- reduction of filtering for the bus signals,
- reduction of crosstalk between the bus lines,
- reduction of electromagnetic emission by the bus lines,
- increase in the trace density of the bus,
- reduction of PCB [Printed Circuit Board] complexity.

Within the general definition of the method according to the present invention, particularly advantageous (in terms of usefulness of application and/or easiness of implementation) embodiments provide that:
- the first number is 8 and the second number is 9,
- the first number is 16 and the second number is 17 or 18 or 19, preferably 18.
If the information word is 8-bit long and the coded word is 9-bit long, the above mentioned lower limit and higher limit may chosen as follows:
A) the lower limit is 3 and the higher limit is 6,
B) the lower limit is 2 and the higher limit is 6,
C) the lower limit is 3 and the higher limit is 7,
D) the lower limit is 2 and the higher limit is 7.
Case A) leads to the minimum oscillations and case D) leads to the maximum oscillations (but still not very high).

The method according to the present invention is particularly useful when applied to terminated busses particularly busses terminated through a common termination voltage source, as the one shown in Fig.1, due to the way oscillations are generated therein.

Additionally, the method according to the present invention is particularly useful when applied to bidirectional busses as they are more prone to generate oscillations; this is very often the case of data busses. It is to be noted that double rate data busses may be in an even worse condition regarding oscillations.

The method according to the present invention may be typically implemented by a driver circuit as the one shown in Fig.1.

The characterizing feature of such driver circuit is its encoder that must be adapted to implement the coding of the information words into coded words according to the present invention.

If such driver circuit is of a terminated logic type (e.g. SSTL or HSTL), particularly of a stub series terminated logic type, as the one of Fig.1, the power provided for the bus by the termination voltage source (VTT in Fig.1) is quite small, independently of the information transmitted over the bus, and the power provided for the bus by the supply voltage source (VCC in Fig.1) is quite constant, independently of the information transmitted over the bus; therefore, switching noise and radiated emission are much limited.

With reference to the specific circuit of Fig. 1 and using a method according to the present invention, the difference between the number of zero-value bits and the number of one-value bits in each coded word transmitted over the bus is not greater than three; therefore, the current sourced by the driver circuit and provided by the supply voltage source through its positive terminal ranges from 66 mA (4 one-value bits) to 100 mA (6 one-vale bits), the current sinked by the driver circuit and provided by the supply voltage source through its ground terminal ranges from 50 mA (3. zero-value bits) to 83 mA (5 zero-value bits), and the current provided by the termination voltage source ranges from -33 mA to +33 mA. If coding according to the present invention would not be applied, the current provided by the supply voltage source at positive and ground terminals would range from 0 mA to 150 mA and the current provided by the termination voltage source would range from -150 mA to +150 mA. The difference between the two cases is evident and huge.

As already said, the encoder of the driver circuit according to the present invention may comprise a ROM memory; alternatively it may comprise a combination logic circuit and may be implemented through e.g. a FPGA or an ASIC.

If an electronic apparatus uses the method according to the present invention for one of its busses, it typically comprises not only an encoder but also a decoder. For the decoder, there apply considerations similar to those made with regard to the encoder.

One or more driver circuits according to the present invention may be incorporated in a circuit board, particularly a PCB [Printed Circuit Board].

The present invention is particularly useful in high speed electronic applications (therefore a typical application of such a circuit board is in fixed telecommunication apparatuses); in fact, in these applications, speed and reliability is more important than power consumption.

In general, the circuit board according to the present invention comprises at least one bus and a corresponding driver circuit connected to it for transmitting words over it. This is the case, of busses BS-1w, BS-2 and BS-3 respectively of Fig.2, Fig.3 and Fig.4; these are busses internal to the circuit board particularly where high speed may be required.

According to a particular advantageous embodiment of the circuit board of the present invention, the internal bus is used to connect one or more memory devices, particularly the data pins of DDR memory devices.

As already explained, in the case of a bidirectional data bus, oscillations tend to be higher; therefore, the present invention is more useful.

It is to be noted that when the present application is applied to a data bus of a memory device, the information words can advantageously be stored into the memory device in their coded format and will be decoded e.g. by the microprocessor that reads the memory device; in this way, the memory device does not require any modification. This corresponds to the embodiments of Fig.2 and Fig.3.

Alternatively, the memory device would require both a decoder and an encoder respectively for decoding the coded words before writing data into its memory locations and for encoding the data read out of its memory locations before sending them out. This is not depicted in any of the drawings.

If the method according to the present invention is used for transmitting addresses to a memory device, as in the case of Fig.4, the encoded address must be decoded before being used for addressing. In this case either the memory device advantageously comprises a decoder connected to its address input buffer, as in the case of Fig.4. Alternatively, a decoder is connected upstream the address input buffer of the memory device and it is therefore outside of the memory device.

Advantageously, the circuit board according to the present invention comprises an error detection circuit adapted to signal an error if a coded address or data word does not comprise a number of zero-value or one-value bits bigger than a lower limit and smaller than a higher limit.

Such an error detection circuit may be located e.g. within integrated circuit IC-1 (Fig.1) or IC-2 (Fig.2) for data error detection, or within memory device MEM-3 (Fig.3) for address error detection.

## Claims

1. Method of transmitting information words over a bus (BS) through a driver circuit (DRV), wherein information words (IW) are coded into corresponding coded words (CW) according to a predetermined code and electric signals corresponding to the coded words (CW) are provided to the bus (BS), wherein each information word includes a first number of bits, wherein each coded includes a second number of bits, the second number being bigger than the first number, **characterized in that** said predetermined code is such that each coded word comprises a number of zero-value or one-value bits bigger than a lower limit and smaller than a higher limit, said lower limit being bigger than one and said higher limit being smaller than said second number minus one.

2. Method according claim 1, wherein said lower limit is two or three or four.

3. Method according to claim 1 or 2, wherein said higher limit is said second number minus two or three or four.

4. Method according to claim 1, wherein said lower limit corresponds to a third number, said third number being two or three or four, and wherein said higher limit corresponds to a fourth number, said fourth number being the difference between said secondnumber and said third number.

5. Method according to claim 1, wherein, if said second number is even, said lower limit corresponds to a fifth number minus one or two or three and said higher limit corresponds to said fifth number plus one or two or three, said fifth number corresponding to said second number divided by two.

6. Method according to claim 1, wherein, if said second number is odd, said lower limit corresponds to the integer immediately lower than said second number divided by two minus one or two or three and said higher limit corresponds to the integer immediately upper than said second number divided by two plus one or two or three.

7. Method according to any of claims from 1 to 6, wherein the first number is 8 and the second number is 9.

8. Method according to any of claims from 1 to 6, wherein the first number is 16 and the second number is 17 or 18 or 19, preferably 18.

9. Method according to any of claims from 1 to 8, wherein said bus is a data bus.

10. Method according to any of claims from 1 to 8, wherein said bus is an address bus.

11. Method according to any of the preceding claims, wherein said bus (BS) is terminated particularly through a common termination voltage (VTT) source.

12. Driver circuit (DRV) having word transmission outputs to be connected to a bus (BS) comprising an encoder (ENC) **characterized by** being adapted to carry out the method according to any of the preceding claims.

13. Driver circuit according to claim 12, wherein the encoder includes:
- a memory adapted to store the coded words; and/or
- a processor adapted to run a program coding the information words into the coded words.

14. Driver circuit according to claim 12, wherein the encoder includes an integrated circuit adapted to implement a combinatorial logic circuit performing the coding of the information words into the coded words.

15. Driver circuit according to any of claims 12 to 14, **characterized by** being of a terminated logic type, particularly a stub series terminated logic type.

16. Circuit board (CB-1, CB-2, CB-3), particularly for a telecommunication apparatus, comprising at least one bus, preferably an internal bus (BS-1w, BS-2, BS-3), **characterized in that** it comprises at least one corresponding driver circuit (OB-1, OB-2, OB-3) according to any of claims 12 to 15 and connected to said bus (BS-1w, BS-2, BS-3) for transmitting words over said bus (BS-1w, BS-2, BS-3).

17. Circuit board according to claim 16, wherein said bus is an internal data bus (BS-1w, BS-2), **characterized in that** it comprises a memory device (MEM-1, MEM-2) connected to said bus (BS-1, BS-2), wherein the driver circuit (OB-1, OB-2) is adapted to transmit over said bus (BS-1, BS-2) coded data words to be written into said memory device (MEM-1, MEM-2).

18. Circuit board according to claim 17, wherein said bus is an internal bidirectional data bus (BS-2), **characterized in that** it comprises a decoder (DEC) connected to said bus (BS-2) for decoding coded data words read out of said memory device (MEM-2) and transmitted over said bus (BS-2) by said memory device (MEM-2).

19. Circuit board according to claim 17, wherein said bus is an internal monodirectional data bus (BS-1w), **characterized in that** it comprises another corresponding internal monodirectional data bus (BS-1r) and a decoder (DEC) connected to said other bus (BS-1r) for decoding coded data words read out of said memory device (MEM-1) and transmitted over said other bus (BS-1r) by said memory device (MEM-1).

20. Circuit board according to claim 18 or 19, **characterized in that** it comprises an error detection circuit adapted to signal an error if a coded data word to be decoded by said decoder (DEC) does not comprise a number of zero-value or one-value bits bigger than a lower limit and smaller than a higher limit.

21. Circuit board according to claim 16, wherein said bus is an internal address bus (BS-3), **characterized in that** it comprises a memory device (MEM-3) connected to said bus (BS-3) and comprising a decoder (DEC), wherein the driver circuit (OB-3) is adapted to transmit over said bus (BS-3) coded address words and the memory device (MEM-3) is adapted to receive from said bus (BS-3) coded address words and to decode them through said decoder (DEC).

22. Circuit board according to claim 21, **characterized in that** it comprises an error detection circuit adapted to signal an error if a coded address word to be decoded by said decoder (DEC) does not comprise a number of zero-value or one-value bits bigger than a lower limit and smaller than a higher limit.

23. Circuit board according to any of claims from 16 to 22, wherein said bus (BS-1r, BS-1w, BS-2, BS-3) is terminated particularly through a common termination voltage (VTT) source.
